# EUROPEAN PATENT APPLICATION

(11) **EP 3 663 125 A2**
(43) Date of publication of application: **10.06.2020**
(21) Application number: 19188851.0
(22) Date of filing: 29.07.2019
(51) Int. Cl.: B60L 53/60, B60L 53/18

(54) **SYSTEM AND METHOD FOR SELECTIVELY CHARGING AN ELECTRIC VEHICLE**

(30) Priority: 07.12.2018 US 201816214020; 07.12.2018 US 201816214028
(71) Applicant: Watson, David Timothy Patrick, London SW11 6 DR (GB)
(72) Inventor: Watson, David Timothy Patrick, London SW11 6 DR (GB)
(74) Representative: Becker & Kurig Partnerschaft Patentanwälte PartmbB

(57) **Abstract**

The disclosure is directed to a smart charging cable that enables dynamically and remotely controlled charging of a battery such as may be found in an electric vehicle (EV). The EV charging cable is not specific to any particular manufacturer or brand of electric vehicle thereby facilitating unrestricted application and access to vehicular charging. The EV charging cable includes a processor arranged to execute instructions stored on a memory along with a communication module for wireless communication between the cable and a remote source. A car emulator may be used to simulate the presence of a vehicle to allow switched high-power sources like standard installed EV chargers as well as a power meter for measuring the flow electricity passing through the cable. The aforementioned may be housed in a control box arranged between two portions of the cable to receive and deliver power from a source to a battery.

## Description

### BACKGROUND

### Technical Field

The present disclosure relates to a system and method for selectively charging an electric vehicle using charging cables.

### Description of the Related Art

Charging electric vehicles entails numerous problems including accessing different power sources; providing a safe and effective charge to the electric vehicle; and arranging to have the electric vehicle sufficiently charged at a given point in time.

There are a variety of different power sources in existence that may be used to charge an electric vehicle. While a common source may be the typical domestic wall socket, after-market enhancements are available to increase the power delivery of the domestic socket. Commercial charging stations are becoming increasingly popular in public spaces; the charging stations being capable of delivering higher levels of power than the standard domestic socket thereby decreasing the required amount of charging time to return the electric vehicle to full power. Both domestic and commercial power outlets or sockets tend to have diverse plugs set by technical, national and international conventions.

Coinciding with the increased popularity of electric vehicles is the increased diversity of their respective proprietary equipment, including the charging cable. Modern electric vehicle charging cables must be capable of interacting with the variety of charging sources, both by way of safely and sufficiently transmitting a charge from source to electric vehicle and by way of physical connectivity, namely, having an appropriate plug for the respective socket.

Electric vehicles may comprise a variety of different batteries and supporting electronics complicating the charging process and potentially leaving the user confused as to when to charge and for how long. Typically, the electric vehicle user will plug his/her vehicle in and let it charge overnight even though such a charge duration may not be necessary or adequate, available or convenient, and/or appropriate for the longevity of the vehicle. Further still, were a large number of electric vehicles be plugged into a local electricity grid at relatively the same time, the load placed on the local electric grid may become overwhelming for the infrastructure resulting in power disruptions, equipment failure and safety hazards.

Solutions proposed for the aforementioned include enhancing the technical capabilities of the charging cable by adding certain enhancements to the cable. For example, to facilitate access to the various power sockets, electric vehicle charging cables may include an adaptor in the form of a cable portion having a first plug at one end that connects to the rest of the charging cable and a second plug at the other end of the adaptor specially configured to fit a particular power outlet or socket.

Certain problems remain with the charging cable including how to ensure end-to-end power and information connectivity, how to ensure electricity is delivered safely from socket to electric vehicle (EV) and how to effectively manage and control the delivery of electricity to meet the user's particular charging needs in a convenient and easy to use manner while not overtaxing local or national electricity grid infrastructures.

Some solutions have been proposed in the art. For example, US Patent 8,085,034 B2 proposes a system and method for managing the electric charging of vehicles wherein a number of charging points are centrally managed. Electric vehicles coupled to a charging point are put into direct communication with a central server which effects-controlled distribution of electricity over the charging points based upon electric vehicle priority and charging allotment. This innovation is limited to the individual electric vehicle's communication capabilities and the number of available charging points.

US 2018/0001776 proposes a charging cable having an in-cable control box housing two communication modules, a processor and memory. One communication module extracts electric vehicle information directly from the electric vehicle via power line communication and the second communication module communicates via WiFi to a supply equipment communication controller which effects the charging of the electric vehicle. The information communicated to the supply equipment communication controller includes maximum charging power of the electric vehicle, duration of charging requested and (upon completion) a request for billing. KR101197552 (B1) proposes a similar arrangement and CN205160153 is directed to including wireless communication in the control box for communication between the electric vehicle and remote sources. DE102009025302 (B4) is concerned with exchanging information between an electric vehicle and a central server for effecting detailed billing and the like. While these innovations are concerned with making sufficient electricity available for charging the electric vehicle at a maximum charging rate over a sufficient amount of time to reach a particular electric vehicle battery charge level, other future oriented solutions would be desirable in the art such as when the uptake of electrical vehicles becomes more widespread, conventional cables may become insufficient or inconvenient and/or the local electrical grids have not kept pace with such technical and consumer advancements.

### BRIEF SUMMARY

Accordingly, embodiments of the present disclosure are provided to substantially obviate one or more of the problems arising out of the limitations and disadvantages of the related art in providing solutions including a substantially automatic method for selectively and safely charging an electric vehicle from different power sources.

Various embodiments of the technology described herein provide systems and methods for dynamically charging a variety of electric vehicles from a variety of power sources in a safe and controlled manner. Indicators, such as programmable resistors, are arranged to facilitate exchange of information between power source, electric vehicle and the electric vehicle charging cable. The charging cable is thus arranged to operate as a "man in the middle" dynamically facilitating the flow of power from the power source to the electric vehicle and instructing the electric vehicle at what level to charge its battery; the level of battery charge not necessarily being equal to the total available and possible amount of power that could flow from the power source and in fact oftentimes may be less. The level of battery charge may be set in advance by an individualized schedule obtained by the electric vehicle charging cable from an external source, such as a server arranged in a cloud and dynamically monitored and updated to ensure a best charge under particular circumstances.

The technology described herein not only improves the convenience of using charging cables, it also considers situation-specific or circumstantial information to optimize the charging process. From the perspective of the user the charging process is optimized because charging may take place at reduced or optimized cost, such as, in addition to financial considerations, battery degradation and carbon footprint. It may also take place according to user specified criteria such as only using green energy or making the electric vehicle available for particular trips at particular times. The charging process is still further optimized from the perspective of the power grid operator because load balancing is improved and more controls are added.

As to the convenience of use, the technology described herein minimizes user actions, enabling essentially a plug-and-play feature. That is, all the user has to do is park the electric vehicle at charging site, e.g., at home or a public charging station (where identification may be required prior to a charging session) and connect the charging cable to the charging station and the electric vehicle. The charging cable then controls the optimized charging based on the charging schedule.

An aspect of the technology described herein relates to a charging cable for charging an electric vehicle from a power source having a maximum charging power limit, the electric vehicle having a battery and configured to charge the battery at a select limit, the charging cable comprising: a control box mounted on the charging cable configured to dynamically set a maximum charging power limit for the electric vehicle battery; and an adaptor arranged to connect the control box and the power source, the adaptor configured to provide an indication of a maximum charging carrying capacity of a portion of the charging cable. While described here as a battery, it should be understood that the charging may be made to any electric energy storage system including but not limited to batteries, superconductors, battery cells, accumulators and the like, wherein chemical energy is converted into electricity and used as a source of power.

Still other aspects of the technology relate to the charging cable, wherein the control box further comprises: a first processor and a communication module arranged to receive instructions from the first processor, wherein the first processor is configured to request a charging schedule over the communication module, at least one transmission switch arranged to open and close a transmission of power from the power source to the electric vehicle, the at least one transmission switch configured to be controlled by the first processor, wherein the first processor is further configured to generate a first signal indicative of a select limit set in accordance with the charging schedule and to transmit the first signal to the electric vehicle for use as a charging limit by the electric vehicle in charging the battery. The switch may comprise a manual or electrically operated electromechanical device such as an interrupter or relay that opens and closes the circuit.

Yet another aspect of the technology relates to a method of charging a battery of an electric vehicle from a power source having a maximum charging limit, the electric vehicle configured to charge the battery at a select limit, the method comprising the steps of: obtaining by a control box of a charging cable a status of the electric vehicle; obtaining by the control box a battery charging schedule from a remote server, the charging schedule comprising the select limit as a function of time; transmitting by the control box a first signal to the electric vehicle setting the select limit for charging the battery in accordance with the charging schedule; and releasing by the control box the maximum charging limit from the power source to the electric vehicle.

### BRIEF DESCRIPTION OF THE SEVERAL VIEWS OF THE DRAWINGS

The accompanying drawings, which are incorporated in and constitute a part of this disclosure, illustrate exemplary embodiments and, together with the description, serve to explain the disclosed principles.
Figure 1a depicts a high-level overview of an embodiment of the technology disclosed herein and the environment in which the technology disclosed herein may be applied.
Figure 1b depicts a functional view of an in-cable control box arranged in direct connection with an adaptor according to an embodiment of the technology disclosed herein.
Figure 2 depicts a first arrangement for implementing an embodiment of the technology disclosed herein.
Figures 3a and 3b depict a second arrangement for charging an EV in accordance with another embodiment of the technology disclosed herein.
Figure 4 depicts a third arrangement for charging an EV in accordance with another embodiment of the technology disclosed herein.
Figure 5a depicts a signal chart method for charging an EV in accordance with the first arrangement of the technology disclosed herein.
Figure 5b depicts another method for charging an EV in accordance with the first arrangement of the technology disclosed herein.
Figure 5c depicts still another method for charging an EV in accordance with the first arrangement of the technology disclosed herein.
Figure 6 depicts a method for charging an EV in accordance with the second arrangement of the technology disclosed herein.
Figure 7 depicts a method for charging an EV in accordance with the third arrangement of the technology disclosed herein.

### DETAILED DESCRIPTION

The technology described herein is based upon the concept of intervening in a controlled manner between a power source and an electric vehicle and dynamically controlling the level in which the electric vehicle charges its electrical energy storage system, hereinafter referred to as a battery; the level potentially being different from the maximum available charging power from the power source. Power sources generate and transmit power at one level, namely, a maximum available charging power level. By causing the electric vehicle to regulate its battery charge, dynamic control over the attainment of a desired electric vehicle battery charge is achieved. Further, by offering the present "man in the middle" type solution, embodiments of the technology disclosed herein are able to ensure that power from the power source flows safely and continuously so long as it is required, and it is safe to do so. Further still, by communicating with the electric vehicle, embodiments of the technology disclosed herein are able to ensure that a best charge is provided to the electric vehicle battery based upon parameters surrounding the EV and its users rather than based simply upon how much maximum charging power is available from a power source. The "man in the middle" functionality briefly described above is achieved through particular configurations of electronics and modules built into the control cable and particular methods of using the same in conjunction with components built into or otherwise associated with other devices.

As used herein, electric vehicle supply equipment (EVSE) is an arrangement of various electronic modules on one or more printed circuit boards with suitable power and configuration to operate and perform specified and intended functions as will be detailed herein below.

The present embodiments may be suitable for use with different power sources which may include: regular single- or multi-phase AC power sources, usually in the range of 1 to 3 phases, rated at 110 - 240 volts and 10-32 Amps; heavy-duty multi-phase sources usually rated at greater than 32 Amps; and higher capacity 3-phase AC power sources rated at up to 480 Volts and 32 Amps suitable for a 7 pin type 2 connector. As is known in the art, in charging an EV with a type 2 connector, the EV will generate a number of different statuses to facilitate the charging. The statuses may include standby, vehicle detected, ready (charging), with ventilization, no power (shut off) and error.

The composition of the electric vehicle charging cable may comprise a number of conductors conforming to the type of power source. As shall be depicted, embodiments of the technology disclosed herein shall be set out with respect to a higher capacity power source necessitating a compatible charging cable having seven conductors. Still other embodiments as related to regular single- or multi- phase power sources shall be described with the EV charging cable comprising three conductors.

Embodiments of the technology disclosed herein comprise a number of processors arranged and configured to execute instructions stored on a number of memories in order to carry out particular operations. Information may further be communicated among indicator elements, of which resistors are presented by way of example, to communicate information among the various elements of the present embodiments in a type of handshake arrangement. Other indicator elements may include capacitors, inductors, transceivers and/or memories arranged and configured as would be appreciated by the skilled person. An example operation includes determining a resistance of a resistor in a circuit, wherein the resistor may be a programmable variable resistor in a closed circuit between at least two conductors. Here, the number of processors will cause the resistance in each of the conductors to be measured and the difference taken there-between such that the difference is indicative of the resistance effect of the programmable variable resistor being measured. This operation takes place with known components under instructions that are a matter of design choice to the skilled person. By this method, it becomes possible to communicate information between processors by setting the resistance of a particular resistor to be associated with certain information tabulated in a lookup table. When a processor determines the resistance and matches such determination via a known lexicon against particular information, via for example the look up table that associates resistances with the particular information, the measured resistance reveals to the processor performing the resistance measurements the particular information matching the measured resistance. For descriptive purposes, the aforementioned operation shall be described herein below in terms of a processor determining the resistance of a particular resistor.

Exemplary embodiments are described with reference to the accompanying drawings. Wherever convenient, the same reference numerals are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

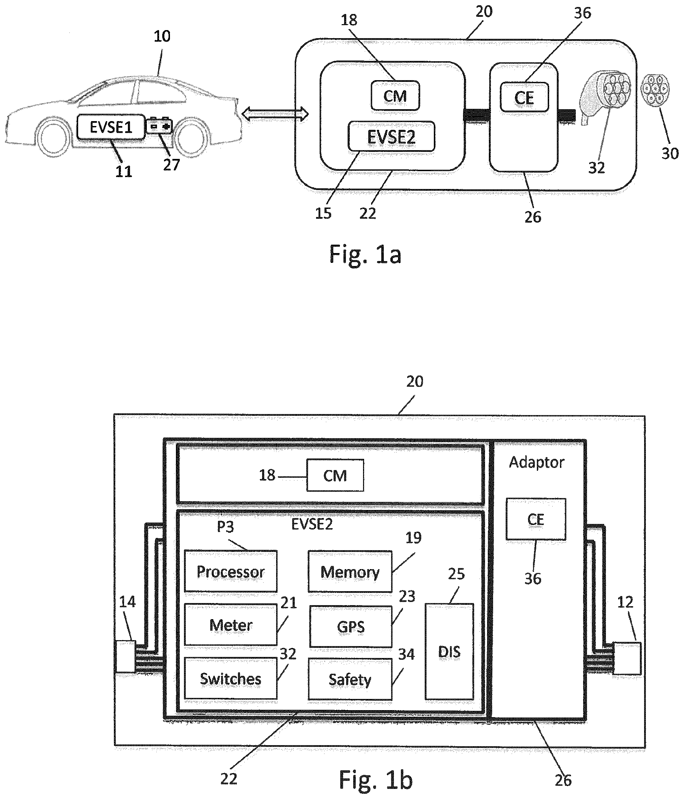

Figure 1a depicts a high-level overview of the technology disclosed herein and the environment in which the technology disclosed herein may be applied, namely, the charging of an electric vehicle. As shown, an electric vehicle (EV) 10 is connected to a power source 30 (depicted here as a type-2 socket that may typically be referred to as the IEC 62196 Type 2 Connector or Mennekes) via an EV charging cable 20. The EV 10 includes a built-in car charger herein referred to as an electric vehicle supply equipment (EVSE1) 11 arranged to electronically interface 13 with the EV charging cable 20 and charge a battery 27. Such interface may comprise a plug and socket arrangement (not shown). The EV charging cable 20 includes an in-cable control box 22 accommodating an electric vehicle supply equipment (EVSE2) 15 and a wireless communication module CM 18 therein. The EV charging cable 20 includes an adaptor 26 accommodating a car emulator CE 36 therein. The adaptor 26 is connected at one end to the in-cable control box 22 and at the other end to the power source 30. The connection between the adaptor 26 and the power source 30 may be made by a matching plug 32 and socket arrangement. Alternatively, the adaptor 26 may be arranged within the control box 22. Still further, an electric vehicle supply equipment may be arranged at the power source 30 between the power source 30 and the adaptor 26 (not shown).

Figure 1b depicts a functional view of the in-cable control box 22 arranged in direct connection to the adaptor 26. The two are arranged along the EV charging cable 20 between a first cable portion 12 of the charging cable 20 and a second cable portion 14 of the charging cable 20. As depicted, the EVSE2 15 accommodates: at least one third processor P3 arranged to execute instructions stored on memory 19; a power meter 21 arranged to measure charging power that is transmitted by the EV charging cable 20; a GPS 23 arranged to determine position coordinates of the EV charging cable 20; a display 25 arranged to display and exchange information outside of the in-cable control box 22; and a plurality of electronic switches 32 as well as a safety module 34 arranged to selectively and safely control power transmission over the EV charging cable 20. The depicted modules may be logically arranged on any number of powered printed circuit boards as a matter of design choice known to the skilled person.

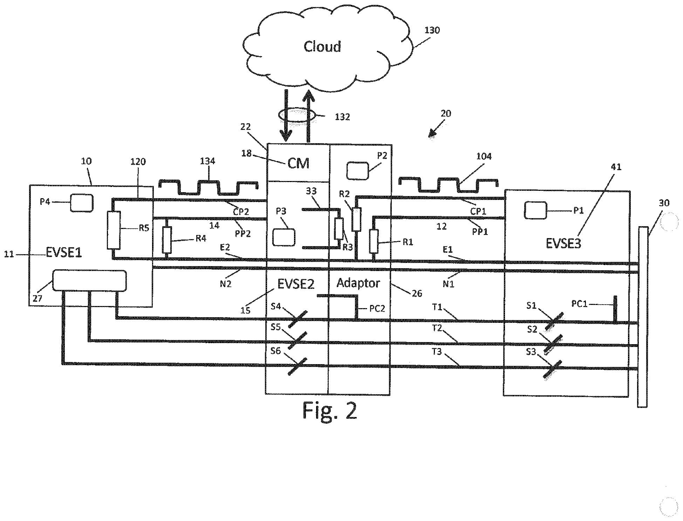

Figure 2 depicts a first arrangement for implementing an embodiment of the technology disclosed herein. As shown, a wall electric vehicle supply equipment EVSE3 41 is connected to the power source 30 at one end and the EV charging cable 20 at the other end. By separate arrangement, the EV charging cable 20 may also be connected directly and/or partially to the power source 30.

For illustrative purposes, the power source 30 comprises a 7-pin Type 2 connector, commonly referred to as Mennekes. Therefore the EV charging cable 20 comprises seven individual conductors: a control pilot depicted in two parts, a first control pilot line CP1 and a second control pilot line CP2; a proximity pilot depicted in two parts, a first proximity pilot PP1 and a second proximity PP2; a ground depicted in two parts, a first ground E1 and a second ground E2; a neutral depicted in two parts, a first neutral line N1 and second neutral line N2; and three multi-phase power cables or transmission lines T1, T2 and T2.

The EVSE3 41 may include at least one first processor P1 arranged to execute instructions stored in a memory (not shown) as well as receive power from transmission line T1 via first power connector PC1. The ground E1 and the neutral N1 are arranged to run through the EVSE3 41 from the power source 30 to the adaptor 26. A plurality of first electric switches S1, S2 and S3 are arranged on the transmission lines T1, T2 and T3 respectively and are configured to be selectively opened and closed by first processor P1.

The adaptor 26 may be arranged to receive power from a transmission line, such as the transmission line T1 via a second power connector PC2. By virtue of the connectivity between the adaptor 26 and the EVSE2 15, the EVSE2 15 may also be arranged to receive power from the transmission line T1 via the second power connector PC2. The adaptor 26 accommodates the car emulator 36 (Figure 1b) that includes: a second processor P2, a first resistor R1, a second resistor R2 and a third resistor R3. The resistors R1, R2 and R3 may be fixed or variable resistors configured and arranged to be programmable by the second processor P2. The second resistor R2 is arranged in a circuit with the EVSE3 41 over the first control pilot line CP1 and first ground E1. The first resistor R1 is arranged in a circuit with the EVSE3 41 over the first proximity pilot PP1 and the first ground E1. The third resistor R3 is arranged in a circuit 33 with the EVSE2 15.

The EVSE2 15 includes a third processor P3 arranged to execute instructions stored in a memory (not shown). A plurality of second electric switches S4, S5 and S6 individually arranged on the transmission lines T1, T2 and T3, respectively, upstream in the direction of the EV 10 from the power source 30. The second electric switches S4, S5 and S6 are configured to be selectively opened and closed by the third processor P3.

A connector (not shown) attaching the EV charging cable 20 to the EV 10 includes a fourth resistor R4 arranged in a circuit with EVSE2 15 over the second proximity pilot PP2 and the second ground E2. The fourth resistor R4 is fixed and relates to the rating of the second cable portion 14. Alternatively, in another embodiment, the fourth resistor R4 may be arranged and configured to be programmable by third processor P3 or may be pre-programmed depending upon application and/or embodiment.

The EVSE111, of the electric vehicle 10, comprises a fourth processor P4 arranged to execute instructions stored on a memory (not shown), a fifth resistor R5 arranged in a circuit 120 with the EVSE2 15 over the second control pilot line CP2 and the second ground E2, and a battery 27 arranged to receive a charge from the transmission lines T1, T2 and T3 under the control of the fourth processor P4. The fifth resistor R5 is arranged and configured to be programmed by the fourth processor P4. The transmission lines T1, T2 and T3 are connected to the EV 10 so as to deliver charging power to the EV 10 from the power source 30.

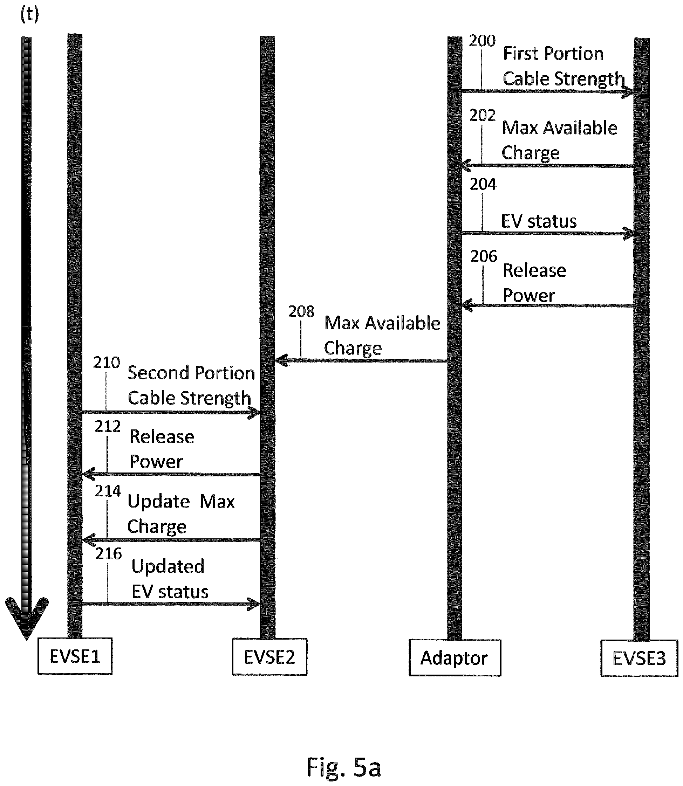

Figure 5a depicts a signal chart method for charging an EV 10 in accordance with the first arrangement of the technology disclosed herein. In step 200, upon being connected to the power source 30, the EVSE3 41 receives power over the first power connector PC1 such that the first processor P1 powers up. Typically, after initial installation, the first processor P1 is in regular receipt of power from the power source thereby obviating the necessity to power up for every use. Upon becoming operational, the first processor P1 obtains from memory (not shown) or from checking (measuring the resistance) the first resistor R1, the charge carrying capacity of the first portion 12 of the charging cable 20.

In step 202, the EVSE3 41 determines which is the lower value between the maximum current generating capabilities of the power source 30 and the maximum current carrying capabilities of the first cable portion 12 of the charging cable 20, which is determined from reading the resistance of the first resistor R1. Alternatively, an even lower value may be substituted by the EVSE3 41. Subsequent thereto but included within this step, the EVSE3 41, upon determining the lower value, generates the signal 104, encodes the lower value into the signal 104, and transmits the signal 104 over the CP1 to the adaptor 26.

In step 204, the EVSE3 41 determines the EV status by reading the second resistor R2. The EV status set into the second resistor R2 by default is "ready (charging)". The second resistor R2 would be in circuit with the EVSE3 41 by virtue of the adaptor 26 being plugged into or otherwise having a physical connection with the EVSE3 41.

In step 206, upon the determination of the status as being "ready (charging)", the EVSE3 41 closes first switches S1, S2 and S3 causing power to be released from the power source 30, along the transmission lines T1, T2 and T3 and in the direction of the EV 10. Power would thus be received at the adaptor 26, along the second power charging conductor PC2, thereby powering up the second processor P2. Power would further be received at the EVSE2 15, via the second power charging conductor PC2, thereby powering up the third processor P3.

In step 208, the second processor P2 causes the signal 104 to be detected and decoded such that the maximum charging power available from the power source 30 becomes known at the second processor P2. The second processor P2 then sets the resistance of the third resistor R3 to be indicative of the maximum charging power available from the power source 30 such that when third processor P3 determines the resistance of the third resistor R3, the maximum charging power available from the power source 30 becomes known to the third processor P3.

In another embodiment, a current status of the EV 10 may be communicated to the EVSE3 41 by the second processor P2 setting the resistance of the second resistor R2 accordingly, thereby enabling the first processor P1 to read and decode the resistance of the second resistor R2. The second processor P2 sets the resistance of the second resistor R2 to match the EV status, for example, "ready (charging)". First processor P1 is enabled to read the resistance of the second resistor R2 and decodes the current state of the EV status.

In step 210, the third processor P3 then obtains the current carrying capacity strength or rating of the EV charging second cable portion 14 by determining the resistance of the fourth resistor R4. Alternatively, if the current carrying capacity or rating of the EV charging second cable portion 14 is known in advance, the resistance of the fourth resistor R4 may be set in advance. Such may, for example, be read from information stored in memory (not shown).

In step 212, the third processor P3 obtains a charging schedule from the cloud 130 via the communication module 22. The charging schedule sets out a maximum charge level or select level per a given time period for the fourth processor P4 to effect and for the third processor P3 to communicate such that the fourth processor P4 can implement the charging of the EV battery 27. The third processor P3 then encodes a current maximum available charge, as dictated by the schedule, into the signal 134 that is then transmitted on the second control pilot line CP2 to the EVSE1 11 to be read and decoded by the fourth processor P4. The third processor P3 then causes the second electric switches S4, S5 and S6 to close thereby releasing power along the transmission lines T1, T2 and T3 to the EV 10 for charging of the EV battery 27 under the control of fourth processor P4 upon a determination of the EV status being "ready (charging)". In an alternative embodiment, the schedule may be obtained after charging of the EV 10 has commenced.

In step 214, the third processor P3 updates the maximum charge level encoded into signal 134 in accordance with the schedule thereby causing the fourth processor P4 to adjust the charging of the EV battery 27. Accordingly, the fourth processor P4 proceeds with the charging of the EV battery 27 based upon the maximum available power decoded from signal 134 regardless of whether a maximum charge level for charging the EV battery 27 is equal to or less than the maximum available charging power from the power source 30.

In step 216, the third processor P3 reads the EV status from the resistance of the fifth resistor R5 as set by the fourth processor P4. Periodically, the fourth processor P4 will update the EV status by setting a corresponding resistance on the fifth resistor R5 for the third processor P3 to read and decode. If the EV status were to be changed to "no power (shut off) " or "error", the third processor P3, upon detection of the same: communicates (132) the EV status to the cloud 130 via communication module 22; to the first processor P1 by causing the second processor P2 to set the resistance of the second resistor R2 accordingly; and to promptly open the second electronic switches S4, S5 and S6 thereby cutting off power transmission to the EV battery 27 from the transmission lines T1, T2 and T3 and thus effectively halting the charging process.

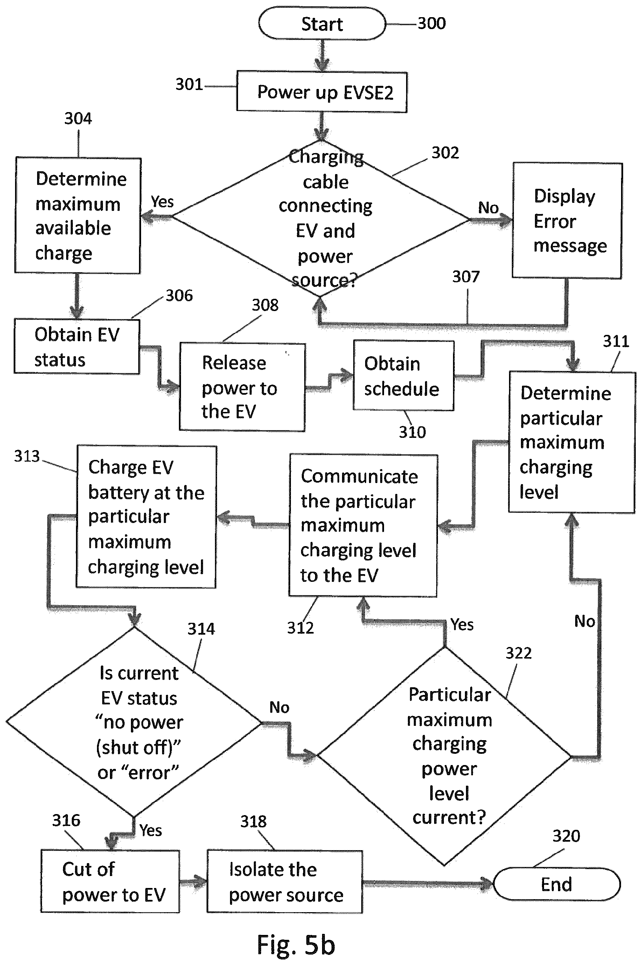

Figure 5b depicts a flowchart method for charging an EV 10 in accordance with the first arrangement of the technology disclosed herein. The method starts in step 300 and proceeds to step 301 wherein the EVSE2 15 is powered up. For example, power may be caused to be released from the power source 30 via instructions which may be received at or pre-programmed (to be retrieved upon determination of the charging cable 20 being connected with the power source 30). Functionally, the first processor P1 may close first switches S1, S2 and S3 thereby facilitating power flow along the transmission lines T1, T2 and T3 to the second power connector PC2 thus powering up the EVSE2 15.

In step 302, a determination is made whether the charging cable 20 is effectively connecting the EV 10 with the power source 30. For example, the determination may be made by the EVSE 2 detecting a charge connection between EV 10 and power source 30. In the event of a positive determination, the method continues to step 304. In the event of a negative determination, a user error message may be generated and communicated to the user via display 25 and the method reverts back (307) to the step 302. Alternatively, after a given amount of reverts, the method may automatically end (not shown).

In step 304, maximum available power from the the power source to charge the EV battery is determined. For example, such determination may be performed by first processor P1 comparing a maximum of power output from power source 30 versus power carrying capacity of the charge cable first portion 12 and then communicating the lesser of the two, via a handshake or encoded into a signal (e.g. 104), to the third processor P3.

In step 306, EV status is obtained. For example, the status of the EV 10, with respect to charging its battery 27, may be determined and communicated by the EV, via handshakes, to the control box 22 and processor P3 in particular.

In step 308, power is released to the EV 10 for charging its battery 27. For example, the release may be enabled by the third processor P3 closing a plurality of switches (S4, S5, S6) on the transmission lines T1, T2 and T3.

In step 310, a charging schedule is obtained. For example, the charging schedule may be received from the cloud and may further comprise charging levels per given period of time (pre)defined and/or particular to the user or EV battery 27 requirements.

In step 311, a particular maximum charging level is determined. For example, the particular maximum charging level may be the appropriate level in which the EV battery 27 should charge at the particular point in time in accordance with the schedule obtained in step 310. The determination of the particular maximum charging level may be performed by the third processor P3.

In step 312, the particular maximum charging level is communicated to the EV 10. For example, a particular maximum charging level, in conformity with the schedule of step 310, may be determined by the third processor P3 encoded into signal 134 and communicated to the fourth processor P4 over the second control pilot line CP2 or via a handshake as described above or via similar means as envisioned by the skilled person.

In step 313, the EV battery 27 is charged at the particular maximum charging level. For example, as envisioned by the skilled person, the fourth processor P4, now armed with the current particular maximum charging level makes use of power from the power source 30 to charge the EV battery 27 only at or below the level of the particular maximum charging level.

In step 314, a determination is made whether the current EV status is one of "no power (shut off)" and "error". For example, the current EV status may be determined by the fourth processor P4 and communicated, via signal, handshake and the like to the third processor P3 which then may decode and/or otherwise read the current EV status and/or compare the newly received EV status with the previously known EV status from step 306. If the third processor P3 determines that the newly received EV status is "no power (shut off)" or "error" (e.g. Yes), the method continues to step 316. If the third processor P3 determines that the newly received EV status is other than "no power (shut off)" or "error" (e.g. No), the method continues to step 322.

In step 316, power is cut to the EV 10. For example, the third processor P3 causes the plurality of the second switches S4, S5 and S6 to open, thereby severing the electrical connection between the EV 10 and the power source 30 as was established over the transmission lines T1, T2 and T3.

In step 318, the power source 30 is isolated. For example, the first processor P1 opens the first plurality of switches S1, S2, S3 thereby further severing the electrical connection initiated in step 316 and electrically cutting off or isolating the wall EVSE 41 and the power source 30 from the other elements depicted in Figure 2.

In step 320, the method ends.

In step 322, a determination is made whether the maximum charging level transmitted in step 312 is current. For example, the third processor P3 may compare the particular maximum charging level communicated in step 312 with what would be a current or actual level for this particular point in time as would be in accordance with the obtained schedule. If yes (the particular maximum charging level is up to date with the schedule, the method reverts to step 312 wherein the particular maximum charging level is communicated to the EV. If the determination is that the charging level is not current (e.g. No), the method reverts back to step 311 wherein a particular maximum charging level in accordance with the obtained schedule is determined as highlighted above.

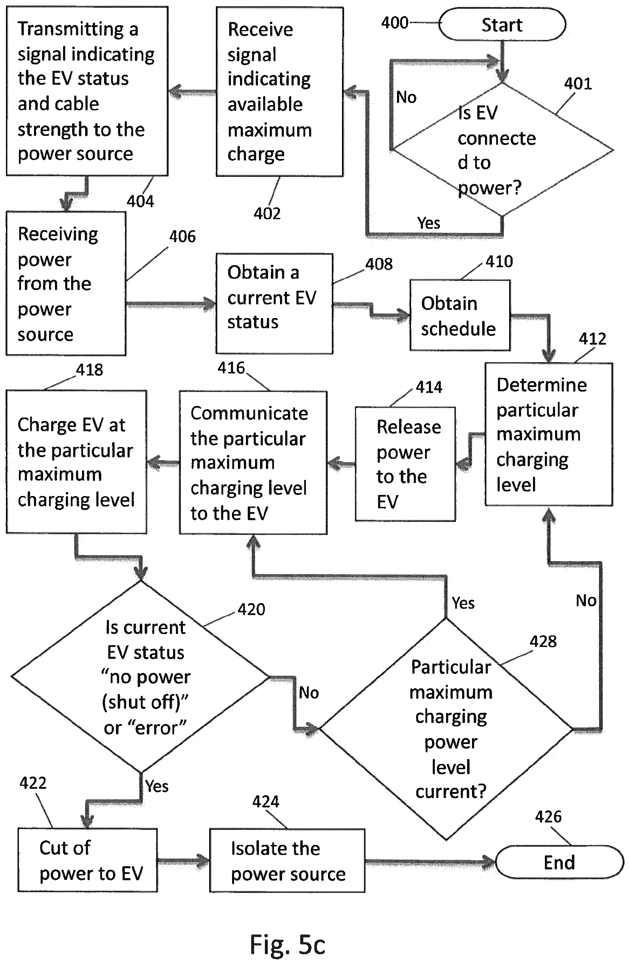

Another operation of the present embodiment will now be described with reference to the flowchart depicted in Figure 5c that is directed to a method for controlling the charging of an EV battery.

Here, the operation starts in step 400 and proceeds to step 401 wherein a determination is made whether the EV 10 is connected to the power source 30 such that power from the power source may be used to charge the EV battery 27.

If the determination is positive (e.g. Yes) that the EV 10 is connected to the power source 30, then the method continues to step 402. If the determination is negative, then the method reverts to step 401.

In step 402, a signal indicating a maximum power charge available from the power source is received. For example, the signal may be received at the in-cable control box and one of the second and the third processor P2 or P3 in particular. The signal may be generated by a smart power source (as depicted in Figure 2) such as by the first processor P1 effecting a power output measurement or retrieving such information from memory (not shown). Once determined, the signal may be communicated via encoding into a signal (e.g. 104), handshake and the like.

In step 404, a signal indicating a maximum charging cable rating and a status of the electric vehicle that is connected to the power source is transmitted to the power source. For example, the maximum charging cable rating may be determined and the EV status may be received from the EV 10 as per steps highlighted above. Additionally, the EV status may be set by default to "vehicle detected".

In step 406, power is received from the power source. For example, the power may be received at the in-cable control box 22 via the first processor P1 closing the first switches S1, S2, S3, thereby releasing power from the power source 30 along transmission lines T1, T2, T3. With power received, the second and third processors P2 and P3 may power up per the second power connector PC2 as described above.

In step 408, a current status of the EV 10 is obtained. For example, the current status may be determined within the EV 10 by an appropriately configured and arranged fourth processor P4 executing appropriate steps stored in a memory (not shown). The current status may then be encoded into a transmitted signal, communicated via a handshake and the like to the in-cable control box 22 and the third processor P3 in particular.

In step 410, a charging schedule for the EV battery 27 may be obtained. The schedule may be obtained (132) from the cloud 130 over communication module CM 18 and may comprise various considerations including an appropriate maximum charging level over, for and at a particular period of time relevant and/or specific to the EV 10 and/or the power source 30. The charging schedule may further be arranged and configured to be used by the in-cable control box 22 and the second and/or third processors P2, P3 in particular to set the charging level for the EV battery 27 to be further executed by the fourth processor P4. Alternatively, the schedule may be obtained at a later time.

In step 412, a particular maximum charging level is determined. For example, as highlighted above, the determination of the particular maximum charging level may be performed by the third processor P3.

In step 414, power is released to the EV 10. For example, as highlighted above, the third processor P3 may cause the second plurality of switches S4, S5, S6 to close thereby facilitating power flow along the transmission lines T1, T2, T3 from the power source to the EV 10.

In step 416, the particular maximum charging level is communicated to the EV. For example, as highlighted above, the third processor P3 may communicate the level to the fourth processor P4.

In step 418, the EV battery is charged at the particular maximum charging level. For example, as highlighted above, the fourth processor P4, now armed with the particular maximum charging level as communicated from the third processor P3, effects the charging of the EV battery 27 at the particular maximum charging level with power received from the power source 30.

In step 420, a determination is made whether the current EV status is one of "no power (shut off)" and "error". For example, as highlighted above, the current EV status may be determined by the fourth processor P4 and communicated to the third processor P3 which then determines if the newly received EV status. If the EV status is "no power (shut off)" or "error" (e.g. Yes), the method continues to step 422. If the third processor P3 determines that the newly received EV status is other than "no power (shut off)" or "error" (e.g. No), the method continues to step 428.

In step 422, power is cut to the EV 10. For example, as highlighted above, the third processor P3 causes the plurality of the second switches S4, S5 and S6 to open, thereby severing the electrical connection between the EV 10 and the power source 30 as was established over the transmission lines T1, T2 and T3.

In step 424, the power source 30 is isolated. For example, as highlighted above, the first processor P1 opens the first plurality of switches S1, S2, S3 thereby electrically cutting off or isolating the wall EVSE 41 and the power source 30 from the other elements depicted in Figure 2.

In step 426, the method ends.

In step 428, a determination is made whether the maximum charging level transmitted in step 312 is current. For example, as highlighted above, the third processor P3 may make the determination. If yes (the particular maximum charging level is up to date with the schedule, the method reverts to step 416 wherein the particular maximum charging level is communicated to the EV. If the determination is that the charging level is not current (e.g. No), the method reverts back to step 412 wherein a particular maximum charging level in accordance with the obtained schedule is determined as highlighted above.

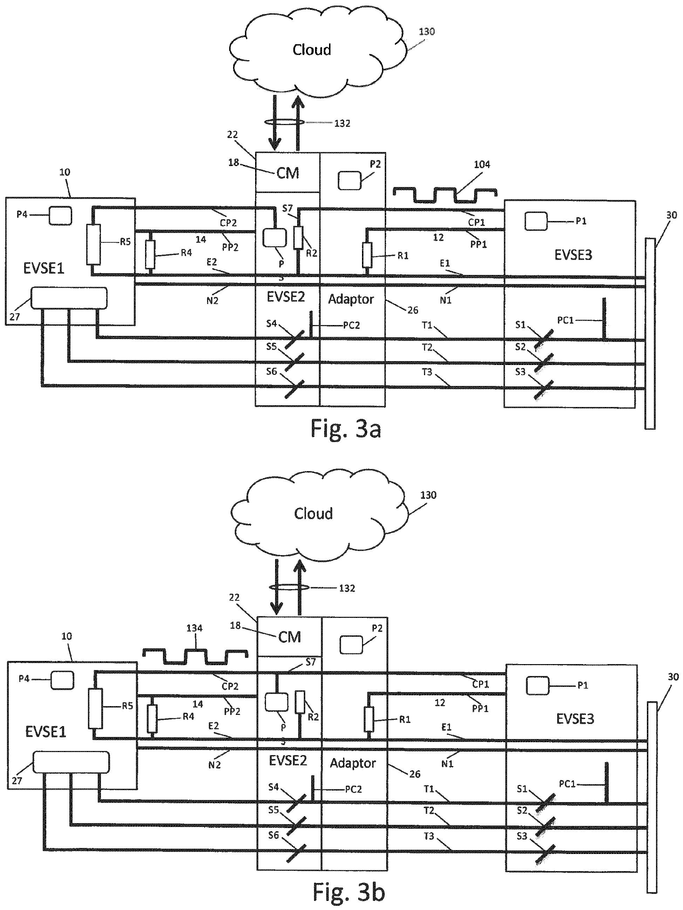

Figures 3a and 3b depict a second arrangement for charging an EV 10 in accordance with another embodiment of the technology disclosed herein, wherein like reference numerals are used to denote like elements. As depicted, the adaptor 26 accommodates the first resistor R1, with the second resistor R2 and the third resistor R3 now absent from the adaptor 26. The second resistor R2 is now accommodated in the EVSE2 15 and the second power connector PC2 now runs directly to the EVSE2 15 from the transmission line T1 thereby avoiding the adaptor 26.

The first control pilot line CP1 is now directly connected with second control pilot line CP2 via third electronic switch S7 (shown in the open position in Figure 3a and in the closed position in Figure 3b) and the second resistor R2 is now arranged in circuit by the connected CP lines or conductors (CP1 and CP2) and the first and second ground lines, E1 and E2, which are now also connected. The third electronic switch S7 is configured to be selectively opened and closed by the third processor P3.

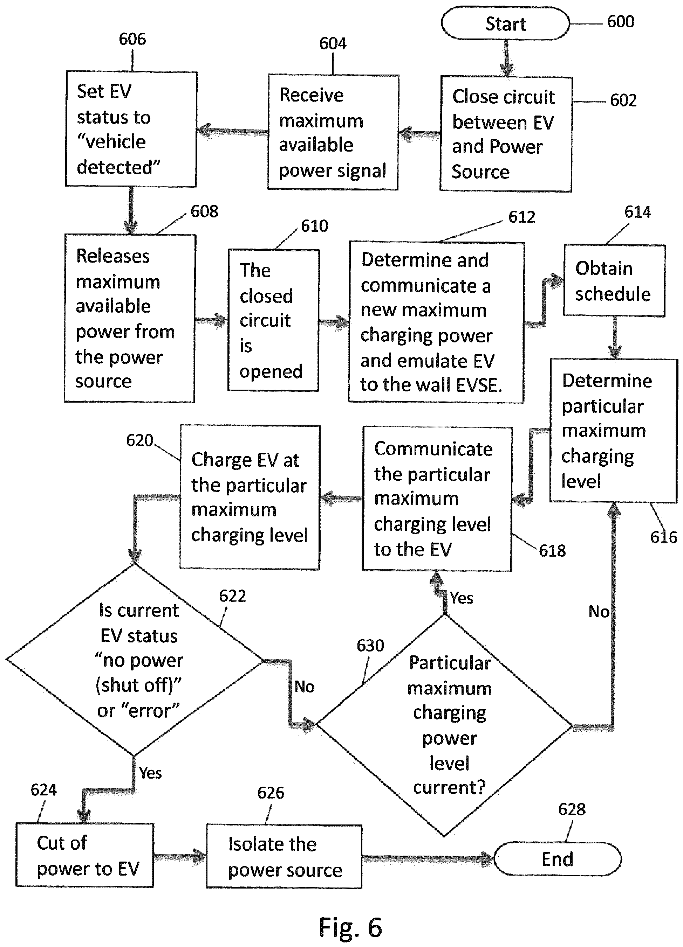

The operation of the second arrangement for charging an EV 10 in accordance with another embodiment of the technology disclosed herein will now be described with reference to Figure 6.

Here, the operation starts in step 600 and proceeds to step 602 wherein, a closed circuit between the power source 30 and the EV 10 is made. For example, the third electronic switch S7 is set to close (Figure 3b) thereby connecting the first control pilot line CP1 with the second control pilot line CP2 such that the EVSE3 41 is in circuit with EVSE111.

In step 604, a signal is received at the EV 10. For example, the signal may, as highlighted above, comprise the maximum available charging power from the power source 10 in cooperation with the charging cable 22, namely, the lesser value of the maximum current output of the power source 30 and the charge carrying capacity of the first cable portion 12. The signal 104 may now uninterruptedly propagate to the EVSE111 where it is detected and decoded by the fourth processor P4.

In step 606, the EV status may be set to "vehicle detected". For example, the setting may be made in response to detection of the signal generated in step 604. As depicted, signal 104, comprising the maximum available charging power may be received and decoded at the fourth processor P4 which in response thereto causes the EV status to read "vehicle detected" and further causes the resistance of the fifth resistor R5 to be set to a value consistent with this EV status.

In step 608, power is released from the power source. For example, the resistance of the fifth resistor R5 is determined and decoded by the first processor P1 via the closed circuit comprising the control pilot conductors and the grounds and the in response to a detection of the EV status being "vehicle detected" (e.g. as per step 606), the first processor P1 causes the first switches S1, S2 and S3 to close thereby releasing power from the power source 30 over transmission lines T1, T2 and T3 in the direction of the EV10. As may be appreciated by the skilled person, other EV status may be detected without hindering the method. The signal may be received at the in-cable control box 22; may be generated by the first processor P1; and be encoded with information regarding the maximum available charge from the power source 30 for charging the EV 10 and transmitted along the control pilot lines CP1 and CP2.

In step 610, the circuit closed in step 602 is opened. For example, the third switch S7 may be opened by the third processor P3. In an alternative embodiment, step 612 is performed prior to step 610.

In step 612, a new maximum available charge is determined and transmitted to the EV and the EV is emulated to the wall EVSE. For example, the cable rating of the second cable portion 14 may be determined by the third processor P3 by its' determining the resistance of the fourth resistor R4 and/or reading the same from a memory (now shown). The third processor P3 may further determine the maximum available charge available from the power source 10 (as highlighted above) as well as determine the current EV status by determining the resistance of fifth resistor R5. The third processor P3 may then generate the signal 134 encoded with the maximum available charge information that is available from the power source 30 as may be decoded from the signal 104; and transmit the signal 134 to the EVSE1 11 along the second control pilot line CP2. The third processor P3 further closes the plurality of second electronic switches S4, S5 and S6, thereby enabling power transmission to the EV 10 over the transmission lines T1, T2 and T3. The third processor P3 may still further set the resistance of the second resistor R2 to be in accordance with the current EV status such that the current EV status may become known to first processor P1 by its determination of the resistance of the second resistor R2. Finally, the fourth processor P4 instructs the EV 10 to charge at a maximum available charge via the signal 134. Alternatively, the fourth processor P4 may set other charge rates in addition thereto so long as it does not exceed the aforementioned maximum available charge.

In step 614, a charging schedule is obtained. For example, the charging schedule may be obtained from the cloud 130 and be particular to desired charging requirements and/or criteria of the EV10. The schedule may be obtained as highlighted above.

In step 616, a particular maximum charging level is determined. For example, as highlighted above, the determination of the particular maximum charging level may be performed by the third processor P3.

In step 618, the particular maximum charging level is communicated to the EV for it to charge its battery at a time and power level dictated by the schedule. For example, as highlighted above, the third processor P3 may communicate the level to the fourth processor P4.

In step 620, the EV battery is charged at the particular maximum charging level. For example, as highlighted above, the fourth processor P4 effects the charging of the EV battery 27 at the particular maximum charging level with power received from the power source 30.

In step 622, a determination is made whether the current EV status is one of "no power (shut off)" and "error". For example, as highlighted above, the current EV status may be determined by the fourth processor P4 and communicated to the third processor P3 which then may determine current EV status accordingly. If the EV status is "no power (shut off)" or "error" (e.g. Yes), the method continues to step 624. If the third processor P3 determines that the newly received EV status is other than "no power (shut off)" or "error" (e.g. No), the method continues to step 630.

In step 624, power is cut to the EV 10. For example, as highlighted above, the third processor P3 severs the electrical connection between the EV 10 and the power source 30.

In step 626, the power source 30 is isolated. For example, as highlighted above, the first processor P1 isolates the wall EVSE 41 and the power source 30 from the other elements depicted in Figure 2.

In step 628, the method ends.

In step 630, a determination is made whether the maximum charging level transmitted in step 312 is current. For example, as highlighted above, the third processor P3 determines whether the current particular maximum charging level communicated in step 618 is up to date with the obtained schedule (of step 614). If yes, the method reverts back to step 618 and if not, the method reverts back to step 616.

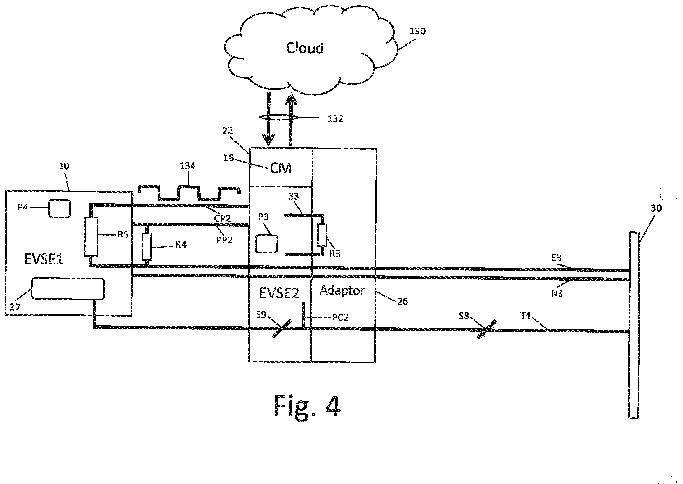

Figure 4 depicts a third arrangement for charging an EV 10 in accordance with another embodiment of the technology disclosed herein. As shown: the power source 30 comprises a domestic wall socket, such as one having a standard domestic wall socket connection with other embodiments of such connections, as may be envisioned by the skilled person, as dependent upon the geographical location and or application of international technical standard in usage; cable socket (not shown) facilitating connection of three conductors: a transmission line T4; a neutral conductor N3; and a ground E3.

By way of example, a fourth electric switch S8 may be located proximate to the power source 30 and may comprise a standard domestic safety switch or circuit breaker. The fourth electronic switch S8 may be arranged and configured to be controlled manually or by the third processor P3. Domestic wall sockets generally lack any signal generation, communication and/or processing means and therefore in the depicted arrangement there is no use made of a wall EVSE (e.g. EVSE3 41) with the domestic wall socket as the power source 30. The adaptor 26 is configured to mate with the domestic wall socket and comprises the third resistor R3 arranged in circuit 33 with the EVSE2 15 such that the third processor P3 may determine the resistance of the third resistor R3. As the adaptor 26 is preconfigured to mate with a particular power source configured to deliver a particular maximum charging power, the level of the available maximum charging power from the domestic power socket is known in advance. Accordingly, the resistance of the third resistor R3 may be pre-configured such that when determined by the third processor P3, the resistance reveals the level of available maximum charging power from the power source 30. The EVSE2 accommodates the third processor P3 therein that is arranged to enable communication 132 with the cloud 130 over the communication module 22 and to selectively open and close a fifth electronic switch S9 arranged on the transmission line T4 upstream, in the direction of the EV 10, from the power source 30 and from the fourth electronic switch S8.

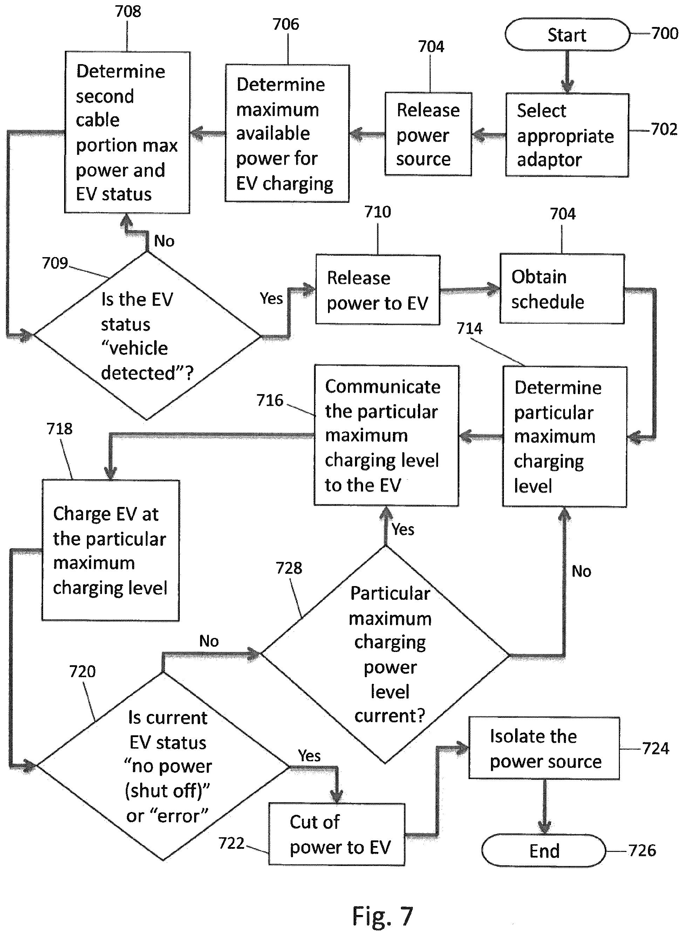

A method for charging an EV 10 in accordance with the third arrangement of the technology disclosed herein will now be described with general reference to Figures 4 and 7 wherein like reference numerals are used to denote like elements.

Here, the operation starts in step 700 and proceeds to step 702, wherein an appropriate adaptor is selected. For example, an adaptor is matching the domestic wall socket is selected and brought into electrical contact with both the EVSE2 15 and the domestic wall socket as the power source 30.

In step 704, power is released from the power source. For example, when present, the fourth electronic switch S8 is closed to enable power flow through transmission line T4 in the direction of the EV 10 thereby powering up the EVSE2 15 over the second power connection PC2. The fourth electronic switch S8 may be closed manually or electronically under the control of the third processor P3 or other means not shown.

In step 706, a maximum charging power available from the power source is determined. For example, the third processor P3 may be powered up by the power flowing per step 704 to the second power connector PC2. The third processor P3 then determines and decodes the resistance of the third resistor R3 in order to identify the maximum available charging power from the power source 30.

In step 708, the EV status and the second cable portion rating are determined. For example, the EV status and second cable portion rating may be determined by the third processor P3 as highlighted above, namely from the handshake conveyed over the fifth and fourth resistor R5 and R4 respectively.

In step 709, a determination is made whether the EV status is "vehicle detected". In the event of a positive determination (Yes), the method proceeds to step 710. In the event of a negative determination, namely, the EV status is other than "vehicle detected", (No), the method reverts back to step 708, selectively, until the method times out and ends.

In step 710, power is released to the EV. For example, upon a determination that the EV status is "vehicle detected", the third processor P3 may close the fifth electronic switch S9 thereby releasing charging power to the EV 10 over transmission line T4. As may be understood by the skilled person, charge arrangements depicted in Figure 4 may include more than one transmission line.

In step 712, a charging schedule is obtained. For example, the charging schedule may be obtained from the cloud 130 and be particular to desired charging requirements and/or criteria of the EV10.

In step 714, a particular maximum charging level is determined. For example, as highlighted above, the determination of the particular maximum charging level may be performed by the third processor P3.

In step 716, the particular maximum charging level is communicated to the EV for it to charge its battery at a time and power level dictated by the schedule. For example, as highlighted above, the third processor P3 may communicate the level to the fourth processor P4.

In step 718, the EV battery is charged at the particular maximum charging level. For example, as highlighted above, the fourth processor P4 effects the charging of the EV battery 27 at the particular maximum charging level with power received from the power source 30.

In step 720, a determination is made whether the current EV status is one of "no power (shut off)" and "error". For example, as highlighted above, the current EV status may be determined by the fourth processor P4 and communicated to the third processor P3. If the EV status is "no power (shut off)" or "error" (e.g. Yes), the method continues to step 722. If the third processor P3 determines that the newly received EV status is other than "no power (shut off)" or "error" (e.g. No), the method continues to step 728.

In step 722, power is cut to the EV 10. For example, as highlighted above, the third processor P3 severs the electrical connection between the EV 10 and the power source 30.

In step 724, the power source 30 is isolated. For example, as highlighted above, the first processor P1 isolates the wall EVSE 41 and the power source 30 from the other elements depicted in Figure 2.

In step 726, the method ends.

In step 728, a determination is made whether the maximum charging level transmitted in step 312 is current. For example, as highlighted above, the third processor P3 determines whether the current particular maximum charging level is current with the obtained schedule. If yes, the method reverts back to step 618 and if not, the method reverts back to step 616.

By this arrangement, the EV 10 is caused to charge at a particular maximum power charging level set by the third processor P3 in accordance with the schedule obtained from the cloud 130 regardless of the available maximum charging power from the source 30.

The communication module CM of the present embodiments may comprise network and communication chips, namely, semiconductor integrated circuits that use a variety of technologies and support different types of serial and wireless technologies as envisioned by the skilled person. Example serial technologies supported by the communication module include RS232, RS422, RS485, serial peripheral interface, universal serial bus, and USB on-the-go, Ethernet via RJ-45 connectors or USB 2.0. Example wireless technologies include code division multiple access, wide band code division multiple access, wireless fidelity or IEEE 802.11, worldwide interoperability for microwave access or IEEE 802.16, wireless mesh, and ZigBee or IEEE 802.15.4. Bluetooth® chips may be used to provide wireless connectivity in solution-on-chip platforms that power short-range radio communication applications. The communication module CM may be configured to operate using 2G, 3G or 4G technology standards, including universal mobile telecommunications systems, enhanced data rates for global evolution and global system for global communication. The 4G standard is based solely on packet switching, whereas 3G is based on a combination of circuit and packet switching.

The processor of the present embodiments may be disposed in communication with one or more memory devices, such as a RAM or a ROM, via a storage interface. The storage interface may connect to memory devices including, without limitation, memory drives, removable disc drives, etc., employing connection protocols such as serial advanced technology attachment, integrated drive electronics, IEEE-1394, universal serial bus, fiber channel, small computer systems interface, etc. The memory drives may further include a drum, magnetic disc drive, magneto-optical drive, optical drive, redundant array of independent discs, solid-state memory devices, solid-state drives, etc.

The memory devices may store a collection of program or database components, including, without limitation, an operating system, a user interface application, a user/application data (e.g., any data variables or data records discussed in this disclosure), etc. The operating system may facilitate resource management and operation of the computer system. Examples of the operating system include, without limitation, Apple Macintosh OS X, Unix, Unix-like system distributions, Linux distributions, IBM OS/2, Microsoft Windows, Apple iOS, Google Android, Blackberry OS, or the like. The user interface may facilitate display, execution, interaction, manipulation, or operation of program components through textual or graphical facilities, including but not limited to touch screens. For example, user interfaces may provide computer interaction interface elements on a display system operatively connected to the computer system, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

It will be appreciated that, for clarity purposes, the above description has described embodiments of the technology described herein with reference to different functional units and processors. However, it will be apparent that any suitable distribution of functionality between different functional units, processors or domains may be used without detracting from the technology described herein. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

The specification has described systems and methods for charging electric vehicles. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A charging cable for charging an electric vehicle from a power source having a maximum charging power limit, the electric vehicle having a battery and configured to charge the battery at a select limit, the charging cable comprising:
a control box mounted in line with the charging cable configured to dynamically set a maximum charging power limit for the electric vehicle battery; and
an adaptor arranged to connect the control box and the power source, the adaptor configured to provide an indication of a maximum charging carrying capacity of a portion of the charging cable.

2. The charging cable according to claim 1, wherein the control box further comprises:
a first processor and a communication module arranged to receive instructions from the first processor, wherein the first processor is configured to request a charging schedule over the communication module;
at least one transmission switch arranged to open and close a transmission of power from the power source to the electric vehicle, with at least one transmission switch configured to be controlled by the first processor;
wherein the first processor is further configured to generate a first signal indicative of the select limit set in accordance with the charging schedule and to transmit the first signal to the electric vehicle for use as a charging limit by the electric vehicle in charging the battery.

3. The charging cable according to claims 1 and 2, wherein the power source is a smart power source and the adaptor is further configured to provide the indication of a maximum charging carrying capacity to the smart power source.

4. The charging cable according to claims 1 to 3, wherein the adaptor is further configured to provide the indication of a maximum charging carrying capacity to the control box.

5. The charging cable according to claims 1 to 4, wherein the select limit is less than or equal to than the maximum charging power limit

6. The charging cable according to claims 1 to 5, wherein the adaptor further comprises:
a first resistor having a resistance indicative of a maximum power carrying capacity of the first portion of the charging cable, a second resistor having a resistance indicative of a status of the electric vehicle, and a third resistor having a resistance indicative of a maximum charging power available from the power source; and
a second processor arranged to selectively set the resistance of the first resistor, the second resistor and the third resistor.

7. The charging cable according to claims 1 to 6, wherein the control box further comprises:
a communication switch configured to be opened and closed by the first processor, the communication switch arranged along a communication line connecting the power source and the electric vehicle; and
a second resistor arranged along the communication line configured to have its resistance set by the first processor such that a second processor arranged at the power source can determine the resistance of the second resistor, the resistance of the second resistor indicative of a status of the electric vehicle.

8. The charging cable according to claims 1 to 7, wherein the adaptor further comprises a first resistor having a resistance indicative of the maximum power carrying capacity of a first portion of the charging cable.

9. The charging cable according to claim 8, wherein the first resistor is arranged to have its resistance set by the first processor.

10. A method of charging a battery of an electric vehicle from a power source having a maximum charging limit, the electric vehicle configured to charge the battery at a select limit, the method comprising the steps of:
obtaining by a control box of a charging cable a status of the electric vehicle;
obtaining by the control box a battery charging schedule from a remote server, the charging schedule comprising the select limit as a function of time;
transmitting by the control box a first signal to the electric vehicle setting the select limit for charging the battery in accordance with the charging schedule; and
releasing by the control box the maximum charging limit from the power source to the electric vehicle.

11. The method according to claim 10, wherein the step of obtaining by a control box of a charging cable a status of the electric vehicle further comprises determining a resistance of a fifth resistor located in the electric vehicle.

12. The method according to claims 10 and 11, wherein a first predetermined value of the resistance indicates a charging status of the electric vehicle and a second predetermined value of the resistance indicates a non-charging status of the electric vehicle.

13. The method according to claims 10 to 12, wherein the step of releasing is performed when the resistance indicates the charging status and the step of releasing is not performed when the resistance indicates the non-charging status.

14. The method according to claims 10 to 13, further comprising the steps:
determining a maximum charge carrying capacity of a portion of the charging cable connection to the control box and the electric vehicle by reading an indicator element arranged on the portion of the charging cable, and
setting the select limit so as to be less than the maximum charge carrying capacity.

15. The method according to claims 10 to 14, wherein the select limit is set by the control box to be less than or equal to the maximum charging limit of the power source.
